# EUROPÄISCHE PATENTSCHRIFT

(11) **EP 0 417 404 B1**
(45) Veröffentlichungstag und Bekanntmachung des Hinweises auf die Patenterteilung: **20.01.1993**
(21) Anmeldenummer: 90111295.3
(22) Anmeldetag: 15.06.1990
(51) Int. Cl.: B29C 67/20

(54) **Verfahren zur Herstellung eines Hohlelementes aus polymeren Werkstoffen**
Method for producing a hollow article of polymeric material
Procédé pour la fabrication d'un corps creux de matériau polymérique

(30) Priorität: 20.07.1989 DE 3924063
(43) Veröffentlichungstag der Anmeldung: 20.03.1991
(73) Patentinhaber: REHAU AG + Co, 95111 Rehau (DE)
(72) Erfinder: Hopperdietzel, Siegfried, Dr., D-8672 Selb (DE)

(56) Entgegenhaltungen:
- EP-A- 0 281 971
- AT-B- 283 716
- AT-B- 300 334

## Beschreibung

Die Erfindung betrifft ein Verfahren zum Herstellen eines Hohlelementes aus polymeren Werkstoffen, bestehend aus einem im Wege der Extrusion hergestellten, ein- bzw. mehrschichtigen, schlauchförmigen Vorformling mit wenigstens einer aufschäumbaren Wandschicht, wobei der Vorformling unmittelbar nach dem Verlassen der Extruderdüse in noch thermoplastischem Zustand von einem teilbaren Formwerkzeug im Trennungsbereich abdichtend umschlossen, in seiner schäumbaren Wandschicht aufgeschäumt, durch Aufweiten in die Endform gebracht und nach Abkühlung aus dem Formwerkzeug als Hohlkörper entnommen wird.

Aus der Europäischen Patentanmeldung 0 281 971 ist ein Verfahren zum Herstellen von Hohlkörpern bekannt, deren Wandung teilweise aus aufgeschäumtem thermoplastischem Kunststoff besteht. Die Hohlkörper werden nach diesem Verfahren im Extrusions-Blasverfahren erzeugt. Hierbei wird zunächst ein wenigstens zwei Schichten aufweisender, schlauchförmiger Vorformling extrudiert, der wenigstens eine Schicht aus aufschäumbarem Kunststoff besitzt. Nach Abschluß des Extrusionsvorgangs ist die Schicht aus schäumbarem Material aufgeschäumt und es wird eine Blasform um den Vorformling geschlossen, in der dieser dann bis zur Anlage an der inneren Formwandung aufgeweitet wird. Die Aufweitung erfolgt durch Anwendung eines inneren Überdruckes, der so bemessen ist, daß die aufgeschäumte Schicht nicht oder nur unwesentlich komprimiert wird.

Das bekannte Verfahren vermeidet den vorher aufgetretenen, negativen Effekt, daß die Bläschen des aufgeschäumten Materials durch den beim Aufblasen entstehenden Überdruck, der immerhin zwischen 5 und 10 bar betragen kann, zusammengedrückt werden.

Dieser negative Effekt wird vermieden, indem der Überdruck auf einer geringeren Größe, nämlich auf ca. 1 bar reduziert wird. Es wird sogar angegeben, daß die Reduzierung auf weniger als 0,5 bar erfolgen kann.

Abgesehen von der Tatsache, daß derartige Feineinstellungen des Blasdrucks erhebliche technische und apparative Schwierigkeiten bereiten, bleibt als besonderer Nachteil, daß aufgrund der Blasdruckreduzierung eine exakte Ausformung des Vorformlings Schwierigkeiten bereitet, insbesondere wenn es sich um komplizierte Raumformen des Endproduktes handelt. Diese Nachteile treten vermehrt dort auf, wo Vorformlinge mit normaler Wanddicke im Blasformverfahren ausgeformt werden sollen. Der Erfindung liegt die Aufgabe zugrunde, das Verfahren der einleitend beschriebenen Art so abzuwandeln, daß eine exakte Ausformung des Vorformlings in seine vorbestimmte Endform ohne spezielle Rücksichtnahme auf den Wandquerschnitt erfolgt, und daß die im Inneren des Vorformlings liegende Schaumschicht durch die Verformungskräfte nicht negativ beeinflußt wird.

Erfindungsgemäß wird gemäß Anspruch 1 dazu vorgeschlagen, daß der Vorformling mittels Unterdruck, welcher auf seine im Werkzeughohlraum freiliegenden Oberflächenbereiche einwirkt, an die Konturen des Formwerkzeugs angelegt wird.

Die Erfindung basiert auf der Erkenntnis, daß zum Anlegen der äußeren Oberfläche des Vorformlings an die Innenkonturen der Form ein Anpreßdruck erforderlich ist, der - wenn er im Inneren des Vorformlings aufgebracht würde - in der Regel eine schädliche Deformierung der inneren Schaumschicht des Vorformlings bewirkt.

Diese innere Schaumschicht muß aber gerade unbeeinflußt bleiben, da solche Formkörper mit innenliegender Schaumschicht beispielsweise im Automobilbau für rohrförmige Leitungen oder Kanäle zur Luftführung benutzt werden. Durch die innenliegende Schaumschicht wird der Körperschall, der beispielsweise aus dem Motorraum in den Fahrgastraum eines Kraftfahrzeugs eintritt, erheblich herabgesetzt, da die innere, poröse Schaumschicht mit ihren offenen Poren schalldämmend wirkt.

Das erfindungsgemäße Ansetzen der Ausformkraft an die Außenhaut des Vorformlings verhindert also die nachteilige Beeinflussung der inneren porösen Schaumschicht. Darüber hinaus bewirkt die von außen an den Vorformling angreifende Ausformkraft, daß ein steuerbarer Druckaufbau erfolgen kann, da keine Rücksicht mehr auf eine schädliche Verformung der inneren porösen Schicht zu nehmen ist. Dies bedeutet praktisch, daß ein so hoher Ansaugdruck aufgebaut werden kann, wie er durch die Wanddicke des Vorformlings und die Konturen der Außenform erforderlich ist. Wird ein einschichtiger Vorformling aus schäumfähigem Material hergestellt, bewirkt das erfindungsgemäße Anlegen der Außenwandung des Vorformlings an die inneren Konturen des Werkzeugs mittels Unterdruck eine Glättung und damit Verfestigung der Außenhaut bei frei geschäumter innerer Oberfläche.

Der für das erfindungsgemäße Verfahren erforderliche Druck kann durch das Anschließen einer oder mehrerer Vakuumpumpen an den Formhohlraum erzeugt werden. Die Erzeugung des Unterdrucks beginnt mit der Schließung der Formhälften und dem dadurch bedingten Abquetschen des Vorformlings an den Schließstellen der geteilten Außenform.

Der Ablauf des erfindungsgemäßen Verfahrens wird kurz wie folgt beschrieben:
Zunächst wird im Wege der Extrusion ein aus einer oder mehreren Schichten bestehender Vorformling schlauchförmig extrudiert. Nach dem Verlassen der Extruderdüse beginnt die schäumfähig eingestellte Schicht des Vorformlings mit dem Aufschäumvorgang. Nachdem eine vorher festgelegte Länge des Vorformlings die Extruderdüse verlassen hat, wird die zweigeteilte Außenform in Richtung zum Vorformling zusammengefahren und geschlossen. Bei diesem Schließvorgang werden die Teile des thermoplastischen Materials, die zur Ausformung des Hohlkörpers in der Form nicht benötigt werden, als Überschußmaterial abgequetscht. Die Abquetschkanten der zweiteiligen Außenform haben neben dem Abquetschen des Überschußmaterials die Aufgabe, den Vorformling und damit den daraus herzustellenden Hohlkörper zu verschließen. Bei den Abquetschkanten können vorteilhaft zur Unterstützung der Dichtheit gesonderte Dichtungselemente integriert sein.

Nachdem die Außenform geschlossen ist, befindet sich der Vorformling in noch thermoplastischem Zustand im Inneren der Außenform, und zwar in einem über die Abquetschkanten verlaufenden, eingespannten Zustand. Mit dem Schließen der Außenform beginnt gleichzeitig über die angeschlossene Vakuumpumpe der Aufbau des Vakuums in den vom Vorformling nicht ausgefüllten Bereichen der Außenform. Die Außenwandbereiche des Vorformlings werden dadurch kontinuierlich in Richtung auf die Konturen der Außenform gezogen. Dieser Vorgang endet mit dem vollkommenen Anlegen der Außenwand des Vorformlings an die Innenwandbereiche der Außenform.

Während dieser Einwirkung des Vakuums auf die Außenwandbereiche des Vorformlings ist in seinem Inneren der Ausschäumvorgang der schäumfähigen Schicht weitergegangen und abgeschlossen worden.

Mit dem Anlegen der Außenwand des Vorformlings an die Innenwandbereiche der Außenform durch die Saugwirkung des angelegten Vakuums tritt eine Abkühlung des nunmehr erzeugten Hohlkörpers in seinen Außenwandbereichen ein, und zwar mit Wirkung von außen nach innen. Da die Abkühlwirkung eine längere Zeit benötigt, um die Außenwandung und die geschäumte Innenwand des Hohlkörpers zu durchdringen, kann es vorteilhaft sein, daß schon in der Endphase des Aufschäumvorgangs der Innenwand im Innenraum des Hohlkörpers ein druckloser Abkühlprozess eintritt. Hierbei kann es sich um eine Hohlraumspülung mit flüssigem Stickstoff handeln. Vorteilhaft verstärkt werden kann diese Kühlwirkung noch dadurch, daß zusätzlich zu der Innenkühlung über eine gesonderte Kühlung der inneren Oberflächen des Formwerkzeugs eine Außenkühlung des Hohlkörpers erfolgt.

Mit diesen Kühlmaßnahmen kann die Zykluszeit der Hohlkörper-Herstellung nach dem erfindungsgemäßen Verfahren erheblich abgekürzt werden. Die Kühlwirkung wird dabei so lange aufrecht erhalten, bis sich die Schichten des Hohlkörpers so weit verfestigt haben, daß die endgültige Kontur gehalten wird. Jetzt kann die Außenform geöffnet und der Hohlkörper entnommen werden.

Im vorgegebenen Beispielsfall ist ein Hohlkörper mit zweischichtigem Wandaufbau beschrieben worden, wobei die kompakte Außenschicht mit einer geschäumten Innenschicht versehen ist. Beide Schichten sind im bekannten Koextrusionsverfahren zusammengeführt und - bei der Verwendung verschweißbarer Kunststoffe - an den Berührungsbereichen miteinander verschweißt. Kann eine solche Verschweißung wegen Unverträglichkeit der beiden verwendeten Kunststoffschichten nicht durchgeführt werden, können die beiden Schichten beispielsweise miteinander verklebt werden.

Trotz des gewählten zweischichtigen Beispiels ist die Anwendung der Erfindung nicht auf zweischichtige Formkörper beschränkt. So kann beispielsweise auch im Wege der Extrusion ein Vorformling mit einer einzigen schäumfähig eingestellten Wand hergestellt und - wie beschrieben - über das erfindungsgemäß von außen angrenzende Vakuum mit seinen Außenwandbereichen verfestigend an die Konturen der Hohlform angelegt werden. Auch können im Wege der Koextrusion mehrschichtige Vorformlinge erzeugt werden, bei denen zwischen beispielsweise zwei kompakten Schichten eine schäumfähige Schicht eingeschlossen ist. Derartige Formkörper können beispielsweise zur Isolation allgemein oder zum isolierten Führen von fließfähigen Medien verwendet werden.

## Patentansprüche

1. Verfahren zum Herstellen eines Hohlelementes aus polymeren Werkstoffen, bestehend aus einem im Wege der Extrusion hergestellten,ein- bzw. mehrschichtigen, schlauchförmigen Vorformling mit wenigstens einer aufschäumbaren Wand, wobei der Vorformling unmittelbar nach seiner Ausformung in noch thermoplastischem Zustand von einem teilbaren Formwerkzeug im Trennungsbereich abdichtend umschlossen, in seiner schäumbaren Wand aufgeschäumt, in die Endform gebracht und nach Abkühlung aus dem Formwerkzeug als Hohlkörper entnommen wird, dadurch gekennzeichnet, daß der Vorformling mittels Unterdruck, welcher auf seine im Werkzeughohlraum freiliegenden Oberflächenbereiche einwirkt, an die Konturen des Formwerkzeugs angelegt wird.

2. Verfahren nach Anspruch 1, dadurch gekennzeichnet, daß in der Endphase des Aufschäumvorgangs der Innenraum des Hohlkörpers einem drucklosen Abkühlprozess unterzogen wird.

3. Verfahren nach Anspruch 2, dadurch gekennzeichnet, daß der Abkühlprozess durch eine Hohlraumspülung mit flüssigem Stickstoff erfolgt.

4. Verfahren nach Ansprüchen 1 und 2, dadurch gekennzeichnet, daß zusätzlich zur Innenkühlung über eine gesonderte Kühlung der inneren Oberflächen des Formwerkzeugs eine Außenkühlung des Hohlkörpers erfolgt.

## Claims

1. Method for the manufacture of a hollow element of polymeric materials, comprising an extruded, single or multiple-layer, tube-like parison with at least one expandable wall, whereby the parison, immediately after being extruded and still in a thermoplastic state, is enveloped by a split mould forming a tight seal at the point of separation, expanded at its expandable wall, taken to its final shape and demoulded as a hollow element after cooling, characterised by the fact that the parison is held against the contours of the mould by means of a vacuum acting on its surface areas exposed within the mould cavity.

2. Method as described in claim 1, characterised by the fact that during the final stage of the expansion process, the inside of the hollow element undergoes a pressureless cooling process.

3. Method as described in claim 2, characterised by the fact that the cooling process is performed by the cavity being flushed with liquid nitrogen.

4. Method as described in claims 1 and 2, characterised by the fact that, in addition to internal cooling, the hollow element is cooled from the outside by means of the mould's inner surfaces undergoing separate cooling.

## Revendications

1. Procédé destiné à la fabrication d'un élément creux en matériaux polymères se composant d'une préforme tubulaire à une ou plusieurs couches fabriquée par voie d'extrusion présentant une paroi moussable au moins, la préforme étant, immédiatement après sa déformation, encore à l'état thermoplastique, hermétiquement entourée, dans la zone de séparation, d'un outil de formage divisible, moussée dans sa paroi moussable, amenée dans le moule final et prélevée, après refroidissement, de l'outil de formage sous forme de corps creux caractérisé par le fait que la préforme est étalée sur les contours de l'outil de formage au moyen de vide qui exerce son effet sur ses zones superficielles libres dans la cavité de l'outil.

2. Procédé selon la revendication 1, caractérisé par le fait que l'intérieur du corps creux est soumis à un processus de refroidissement exempt de pression dans la phase finale du processus de moussage.

3. Procédé selon la revendication 2, caractérisé par le fait que le processus de refroidissement se fait par un rinçage de la cavité à l'azote liquide.

4. Procédé selon les revendications 1 et 2, caractérisé par le fait que le refroidissement interne est complété par un refroidissement externe du corps creux par le biais d'un refroidissement à part des surfaces internes de l'outil de formage.
